Europäisches Patentamt

**European Patent Office**

**Office européen des brevets**

(19)

(11) Publication number: **0 157 645**
A2

(12) **EUROPEAN PATENT APPLICATION**

(21) Application number: **85302359.6**

(22) Date of filing: **03.04.85**

(51) Int. Cl.⁴: **B 32 B 17/10,** C 03 C 27/12

(30) Priority: **04.04.84 GB 8408664**
**08.01.85 GB 8500471**

(43) Date of publication of application: **09.10.85**
**Bulletin 85/41**

(84) Designated Contracting States: **AT BE CH DE FR GB IT**
**LI LU NL SE**

(71) Applicant: **PILKINGTON BROTHERS P.L.C., Prescot**
**Road St. Helens, Merseyside, WA10 3TT (GB)**

(72) Inventor: **Hall, Christopher William Geoffrey, 21 Barford**
**Close Matchborough East, Redditch Worcestershire**
**(GB)**

(74) Representative: **Haggart, John Pawson et al, Page,**
**White & Farrer 5 Plough Place New Fetter Lane, London**
**EC4A 1HY (GB)**

(54) **An impact resistant laminate.**

(57) An impact-resistant laminate has adhered to a rear glass face (7), opposite to the face which receives the impact, a polycarbonate sheet (9) up to 3mm thick which is sufficiently thin to conform to the rear glass face (7) and to be adhered thereto without preforming. Preferably the thickness of the polycarbonate sheet (9) is in the range 0.25 to 0.64mm, and it has a self-healing or abrasion-resistant hard coating (10). The laminate may include toughened or annealed glass sheets.

AN IMPACT-RESISTANT LAMINATE

This invention relates to impact-resistant laminates, and in particular to impact-resistant window panels which embody at least one glass sheet.  Some such panels are bullet-resistant and resist bullets or other high energy impacts with little or no spalling from the rear face of the panel opposite to the face which receives the impact.  Other such panels are "anti-vandal" panels which resist manual attack with weapons such as hammers or pick handles, and impacts of stones and bricks, but do not necessarily resist bullets.

Prior proposals for bullet-resistant glass laminates, and anti-vandal glass laminates usually either accepted the risk of spall from a rear glass face of the laminate or have included a rear plastics sheet, for example a thick polycarbonate or stretched acrylic sheet which is adhered to the rear glass face to combat spall.

In one example of use of the laminate as a vehicle window panel, the front sheet which receives the impact is a glass sheet and the rear sheet which is inside a vehicle is a thick polycarbonate sheet which is ductile and has good resistance to spalling.  Impact-resistant laminates often comprise a number of glass sheets which are laminated together with a rear polycarbonate sheet which provides good resistance to spalling.

GB 1 504 198 describes an impact resistant laminate comprising a number of glass sheets with a rear sheet made of polycarbonate having a brittle scratch-resistant coating on its exposed face.  The tendency of the polycarbonate sheet to spall, due to some extent to the brittle nature of the protective layer, is said to be reduced by reducing the thickness of the polycarbonate sheet to a thickness in the range 0.76 to 5.6mm, and the results given indicate that under certain conditions of "medium power" impact the laminate functions satisfactorily.

In GB 2 011 836 A there is a proposal for an improved impact resistant laminate, which resists a single shot, and which comprises a number of sheets of glass which are adhered together by means of transparent plastics interlayers which serve as the impact shock receiving layers of the laminate. These laminated glass sheets are mounted in a frame and are separated by an air space from a polycarbonate sheet 9.5mm thick to which a scratch-resistant coat of self-healing polyurethane is applied.

The use of a polycarbonate or stretched acrylic sheets as the rear spall barrier of a laminated window panel has added considerably to the cost of the laminate. In some cases the risk of spall from a rear glass sheet has been tolerated, rather than incurring the additional cost of such a rear spall barrier layer.

The Applicants have found that a coated or uncoated thin polycarbonate sheet can act as an effective spall-resistant rear lamina where adhered to a rear glass face of an impact-resistant laminate, in particular an impact-resistant window panel.

According to the invention there is provided an impact-resistant laminate at least 6mm thick having adhered to a rear glass face opposite to the face which receives the impact, a polycarbonate sheet up to 3mm thick which is sufficiently thin to be adhered to the rear glass face without preforming to match the conformation of the rear glass face.

The invention further provides an impact-resistant laminate having adhered to a rear glass face opposite to the glass face which receives the impact, a polycarbonate sheet of thickness in the range 0.25 to 3mm which is sufficiently thin to be adhered to the rear glass face without preforming to match the conformation of the rear glass face.

Usually the thickness of the polycarbonate sheet would be not more than 0.64mm.

However the polycarbonate sheet may be thicker than 0.64mm, e.g. up to 1mm thick or even up to 3mm thick, so long as it is sufficiently flexible to be adhered to the rear glass face of the laminate without preforming to match the conformation of the rear glass face of the laminate. The maximum thickness will depend on the curvature of the laminate. With flat laminates and laminates of low curvature, the polycarbonate may be up to 3mm thick; with highly curved laminates, the polycarbaonte will generally be up to 1mm thick.

Preferred embodiments of the invention comprise a number of glass sheets with the polycarbonate sheet adhered to the rear face of the glass sheet opposite to a glass sheet which receives the impact.

The invention further provides an impact-resistant glass laminate at least 6mm thick comprising a number of glass sheets which are laminated together, with the polycarbonate sheet adhered to the rear face of the glass sheet opposite to the glass sheet which receives the impact.

In one embodiment the laminate may comprise two sheets of annealed glass bonded together by an interlayer of polyvinylbutyral with the polycarbonate sheet adhered to the rear glass face.·

In another embodiment the laminate may comprise three sheets of annealed glass bonded together by interlayers of polyvinylbutyral with the polycarbonate sheet adhered to the rear glass face.

The front sheet of glass which receives the impact may be a strengthened glass sheet.

For example, for use as a windscreen panel in a railway locomotive the front sheet of glass may be a semi-toughened sheet which, on impact, fractures in a manner which does not substantially impair vision through the laminate. Such a laminate for a locomotive windscreen panel would comprise a semi-toughened front glass sheet bonded by a polyvinylbutyral interlayer to a rear sheet of annealed glass to the rear face of which the polycarbonate sheet is adhered.

In another form of the invention the laminate may comprise an anti-vandal window panel for use in an automobile, which laminate comprises two sheets of toughened glass bonded together by an interlayer of polyvinylbutyral with the polycarbonate sheet adhered to the rear face of the rear toughened glass sheet.

Another form of anti-vandal panel according to the invention comprises a sheet of fully toughened glass at least 3mm thick with the polycarbonate sheet adhered to the rear face of the sheet.

Preferably in each embodiment the thickness of the polycarbonate sheet is in the range 0.25 to 0.64mm.

In each embodiment a suitable thermoplastic polyurethane may be employed for bonding the polycarbonate sheet to the rear face of the glass laminate.

The exposed face of the polycarbonate sheet may carry a coating to protect the polycarbonate from abrasion. This may be a self-healing coating, for example a self-healing polyurethane, or an abrasion-resistant, hard coating, for example polysiloxane, melamine or acrylate.

Another embodiment of the invention is an impact-resistant glass laminate comprising a number of glass sheets which are laminated together, and having adhered to the rear glass face opposite to the glass face which receives the impact, a composite lamina comprising a polycarbonate sheet of thickness in the range 0.25 to 0.64mm having an outer self-healing polyurethane coating, which composite lamina is adhered to the rear glass face by a layer of thermoplastic polyester based polyurethane which is of thickness in the range 1.5 to 4mm.

For use as a railway window panel the laminate may comprise a sheet of toughened glass 5mm thick which is laminated to a sheet of annealed glass which is 2 to 3mm thick by an interlayer of soft polyvinylbutyral which is 9 to 11mm thick, with the composite lamina adhered to the rear face of the sheet of annealed glass by the layer of polyurethane which is 2mm thick.

For use as a bullet-resistant window panel the laminate may comprise two sheets of annealed glass which is 12mm thick which are laminated together with an interlayer of polyvinylbutyral which is 1.5mm thick, and a sheet of annealed glass which is 3mm thick laminated to the rear face of one of the 12mm thick glass sheets by an interlayer of polyvinylbutyral which is 3mm thick, and with the composite lamina adhered to the rear face of the 3mm thick glass sheet by the layer of polyurethane which is 2mm thick.

The invention also comprehends a composite lamina comprising a polycarbonate sheet 0.25mm to 0.64mm thick having a self-healing polyurethane coating on one face thereof.

Some embodiments of the invention will now be described, by way of example, with reference to the accompanying drawings, in which:

Figure 1 is a sectional view through one edge of an impact-resistant glass laminate which is a bullet-resistant window, with an inner self-healing coating,

Figure 2 is a sectional view through one edge of a bullet-resistant window panel without a self-healing coating,

Figures 3 and 4 are sectional views through one edge of other bullet-resistant window panels according to the invention,

Figure 5 is a sectional view through one edge of an impact-resistant laminate intended for use as a panel of a locomotive windscreen,

Figure 6 is a view similar to Figure 5 of another locomotive window panel according to the invention, with thick energy-absorbing layers,

Figure 7 is a sectional view through one edge of another laminate intended for use as an anti-vandal automobile window,

Figure 8 is a view similar to Figure 7 of another form of anti-vandal automobile window,

Figure 9 is a view similar to Figure 8 of another form of lightweight anti-vandal window panel, and

Figure 10 is a view similar to Figure 1 of a bullet-resistant window panel with an abrasion-resistant hard coating.

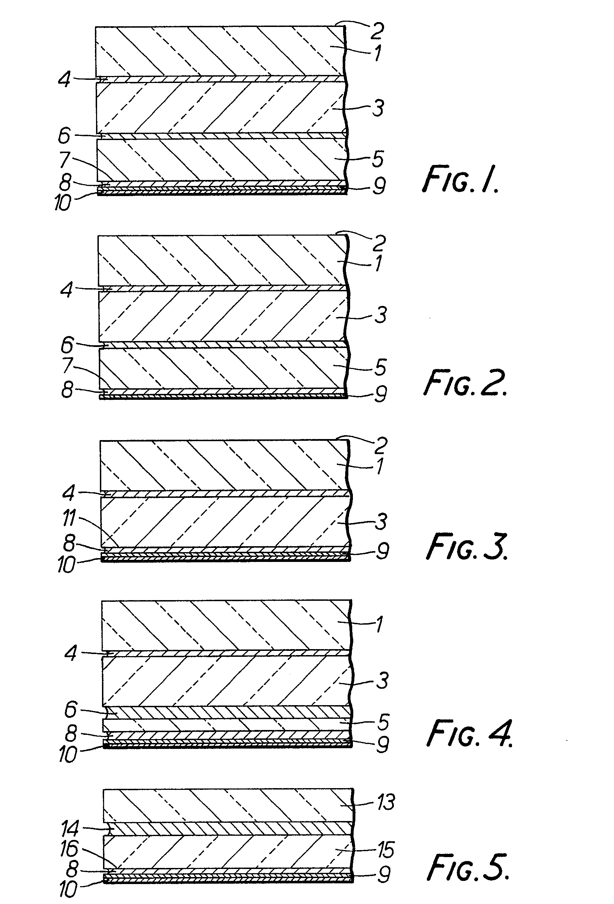

Referring to Figure 1 of the drawings, a bullet-resistant glass laminate comprises an outer sheet 1 of annealed glass 12mm thick whose face 2 receives the impact of a bullet. The sheet 1 is bonded to a second glass sheet 3 of annealed glass 12mm thick, by means of an interlayer 4 of soft polyvinylbutyral 1.5mm thick. A sheet 5 of annealed glass 10mm thick is bonded to the sheet 3 by a second interlayer 6 of soft polyvinylbutyral. The rear glass face 7 of the sheet 5 opposite to the glass face 2 which receives the impact has adhered to it by means of a thin layer of a thermoplastic polyester based polyurethane 8, a composite lamina consisting of a polycarbonate sheet 9 which is 0.5mm thick with an outer coating 10 of self-healing polyurethane which is 0.5mm thick. The outer coating 10 of self-healing polyurethane provides a relatively soft exposed surface which acts as a scratch-resistant layer. When the face 2 of the laminate was hit by a bullet from a 7.62 Parker Hale T4 target rifle under normal atmospheric temperature conditions at a range of 30m, it was found that all the glass sheets were broken and the energy of the bullet was fully absorbed in the glass breakage with only a slight bulge in the polycarbonate sheet 9. Further it was found surprisingly that up to four more bullets could be fired at different target points on the already broken laminate with no appreciable spalling from the rear face, although a bulge of the polycarbonate sheet 9 appeared at each position. At the target position of the fifth bullet there was a small rupture of the composite lamina but still no appreciable spalling. This construction with the thin polycarbonate spall barrier therefore surprisingly could resist up to three other bullets after initial breakage, without spalling from the rear face.

The polycarbonate sheet 9 of the composite lamina is so thin that, as a final step in the manufacture of the bullet-resistant laminate, it can be adhered to the rear glass face 7 by means of the polyurethane layer 8 without preforming to match any curved conformation of the rear glass face. Because preforming is unnecessary, the manufacturing process is simplified, and losses which would be associated with a preforming process involving heating and bending, which would be required with a thick rear polycarbonate sheet, are avoided.

Figure 2 illustrates a modification of the bullet-resistant laminate of Figure 1, in which the scratch-resistant layer has not been applied to the thin polycarbonate sheet 9. This modification is for use in locations where the scratch-resistant property of the inner face of the laminate is not crucial. The laminate of Figure 2 was found in practice to have the same bullet-resistance properties as that of Figure 1, with the uncoated thin polycarbonate sheet 9 acting as an effective spall barrier with up to four bullet impacts on the exposed face 2 of the laminate.

Figure 3 illustrates another bullet-resistant glass laminate which is capable of resisting medium power bullets without spalling. This laminate comprises two sheets 1 and 3 of annealed glass 12mm thick bonded together by polyvinylbutyral interlayer 4. The composite polycarbonate lamina comprising a 0.5mm thick polycarbonate sheet 9 with its 0.5mm thick outer coating 10 of self-healing polyurethane is adhered to the rear face 11 of the glass sheet 3 by means of a layer 8 of the thermoplastic polyester-based polyurethane. This laminate was subjected to test under normal ambient conditions using a 7.62 self-loading rifle at a range of 30m. All the glass was broken but there was no penetration and no spalling from the rear face of the laminate. Similar results were obtained with a laminate of this kind which omitted the self-healing outer coating 10.

Figure 4 illustrates yet another form of bullet-resistant glass laminate consisting of an outer annealed glass sheet 1 which is 12mm thick, and is laminated to a second annealed glass sheet 3 by a polyvinylbutyral interlayer 4 which is 1.5mm thick. A third sheet 5 of annealed glass which is 3mm thick is laminated to the sheet 2 by a 3mm thick layer 6 of polyvinylbutyral. The inner spall barrier is provided by a composite lamina consisting of a polycarbonate sheet 9 which is 0.5mm thick with an outer coating 10 of self-healing polyurethane which is 0.25mm thick. This lamina is adhered to the rear face of the glass sheet 5 by a layer 8 of thermoplastic polyester-based polyurethane which is 2mm thick. This 2mm polyurethane layer improves the effectiveness of the composite lamina 9, 10 as a spall barrier; it is believed to operate by spreading the load area when the glass sheets break upon impact by a bullet.

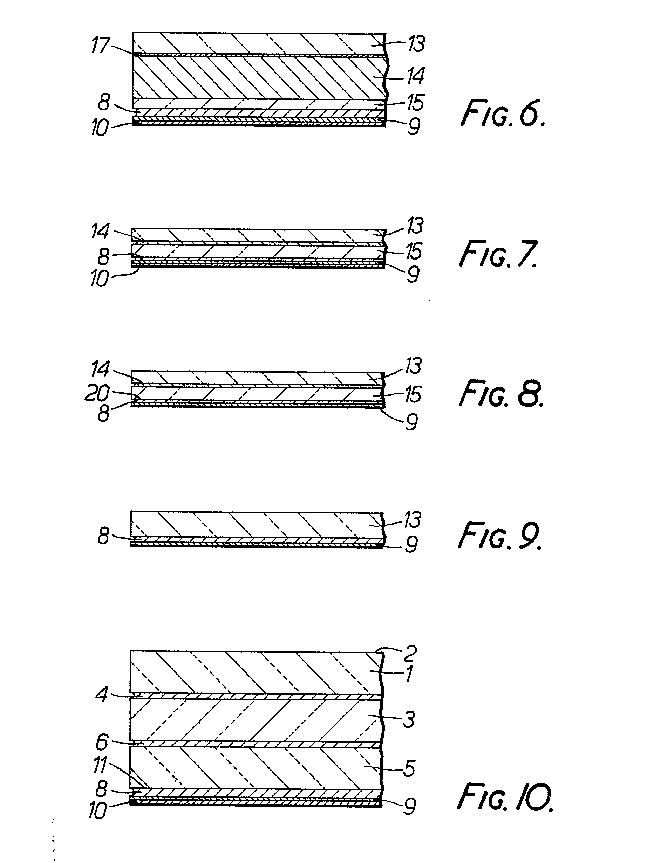

Figure 5 illustrates an impact-resistant glass laminate for use as a windscreen panel of a railway locomotive. Such windscreens may be struck by a bullet but more usually by other missiles with sharp corners or edges such as flying stones. It is important for the driver of the locomotive to have visibility after the impact and also for the outer sheet to be of maximum possible strength. For this reason the outer glass sheet 13 would usually be of strengthened glass and in the embodiment illustrated is a thermally toughened glass sheet 8mm thick which is semi-toughened to a degree such that after fracture vision through the laminate is not substantially impaired. The outer sheet 13 is bonded by a thick polyvinylbutyral interlayer 14, 3mm thick, to an annealed glass sheet 15, 8mm thick, which forms the rear sheet of the glass laminate and to whose rear face 16 a polycarbonate sheet 9 having an outer coating 10 of self-healing polyurethane is bonded by a thin layer of the thermoplastic polyester-based polyurethane 8. The polycarbonate sheet 9 is 0.5mm thick and the self-healing coating 10 is 0.5mm thick and prevents scratching and maintains visibility under usual working conditions in which the locomotive driver would from time-to-time wipe clean the inner surface of the windscreen. The thick polyvinylbutyral interlayer 14 serves as a strong elastic membrane to prevent a heavy missile such as a stone entering the driving compartment of the locomotive if the front glass sheet 13 is broken by the stone. Even though the inner glass sheet 15 is broken as well, the thin polycarbonate sheet 9 prevents spalling.

In this embodiment of the invention, and other embodiments which incorporate a thick polyvinylbutryal or other extensible plastics interlayer, such as the embodiment of Figure 4, the polycarbonate sheet may be thinner than 0.64 mm, for example 0.25mm or even less. However, subject to the requirement that the coated, or uncoated polycarbonate sheet 9 can be adhered to the rear glass face of the laminate without preforming, it may be a thicker sheet, for example 1mm thick or even up to 3mm thick, depending on the curvature of the laminate.

Figure 6 illustrates another form of impact resistant glass laminate for use as a windscreen panel of a railway locomotive. The outer glass sheet of the laminate 13 is a semi-toughened glass sheet 5mm thick which carries a heating film 17. This outer sheet 13 is bonded by a thick layer 14 of soft polyvinylbutyral from 9 to 11mm thick, to an annealed glass sheet 15 which is from 2 to 3mm thick and which forms the rear sheet of the glass laminate. To the rear face of the annealed glass sheet 15 the composite lamina, comprising a polycarbonate sheet 9, 0.5mm thick, with an outer coating 10 of self-healing polyurethane, 0.25mm thick, is bonded by a layer 8 of thermoplastic polyester based polyurethane which is 2mm thick. In the same way as in the embodiment of Figure 4 this 2mm thick polyurethane layer 8 improves the effectiveness of the spall barrier constituted by the composite lamina 9, 10.

Figure 7 illustrates another impact-resistant laminate of the invention which is a light weight "anti-vandal" glass such as can be employed for the window panels of vehicles.

The laminate comprises an outer glass sheet 13 which has a thickness in the range 3mm to 4mm and is bonded by an interlayer 14 of polyvinylbutyral of thickness in the range 0.75 to 1.5mm, to an inner glass sheet 15 whose thickness is in the range 3mm to 4mm. The glass sheets 13 and 15 may be annealed or toughened. The rear face of the sheet 15 has adhered to it by means of a thin layer 8 of the thermoplastic polyether-based polyurethane, a composite lamina comprising a 0.5mm thick polycarbonate sheet 9 with an outer coating 10 of self-healing polyurethane which is 0.25mm thick.

Figure 8 illustrates another form of "anti-vandal" window panel similar to the panel illustrated in Figure 7, in which the anti-spall barrier is a single polycarbonate sheet 0.5mm thick without an outer coating.

The laminates of Figure 7 and Figure 8 provide some bullet-resistance and are effective in protecting the occupants of a vehicle from spalling if the outer sheet 13 is struck with an instrument such as a hammer or a revolver butt.

Figure 9 illustrates a simpler form of impact-resistant glass window panel according to the invention for use an an anti-vandal glass in vehicles for example. This panel provides some resistance to manual attack. The laminate comprises as outer sheet 13 of toughened glass which is 6mm thick. The polycarbonate sheet 9 which is 0.5mm thick, is adhered to the rear face of the glass sheet 13 by a layer of thermoplastic polyether-based polyurethane 8 which is 1.25mm thick. The toughened outer glass sheet may be a thinner or a thicker sheet, for example in the range 3mm to 8mm thick, and the thickness of the polycarbonate sheet may be in the range 0.25 to 3mm, depending on the curvature of the glass. It will usually be in the range 0.25 to 1mm. The polycarbonate sheet may have an outer abrasion-resistant coating, for example of self-healing polyurethane.

- 11 -    0157645

The thin layer 8 of thermoplastic polyurethane may be about 0.5mm thick in each of the embodiments in which a thickness has not been specified. This thickness is sufficient to bond the polycarbonate sheet 9 to the rear glass face, and to take up any thermal expansion stresses. A thicker layer of thermoplastic polyurethane, for example in the range 1.5mm to 4mm may be used if desired, such as the 2mm thick layer of Figures 4 and 6, and such thicker polyurethane layer contributes usefully to the impact performance of the laminate, as it is believed to spread the load area on the polycarbonate when the glass sheet breaks upon impact by a bullet.

Instead of using a thermoplastic polyurethane for the layer 8, a layer of another compatible thermoplastic adhesive of similar thickness may be used, for example a silicone resin adhesive.

The glazing for an automobile is often of special pre-formed curved shape, that is a laminate constructed according to Figure 4 is often of a pre-formed curved shape. The polycarbonate sheet in thin flexible form has been found to be particularly suitable for use in the manufacture of such anti-bandit laminates since the thin laminate sheet alone or the coated sheet readily adheres to the already shaped glass laminate without any special shaping process being necessary for pre-shaping the spall resistant polycarbonate sheet to conform to the shape of the main part of the laminate.

In all applications of the invention therefore the pre-forming of the spall resistant thin polycarbonate sheet or the composite lamina consisting of the polycarbonate sheet with its scratch-resistant coating, is avoided.

Figure 10 illustrates another embodiment of the invention in which the laminate comprises three sheets of annealed glass 1, 3 and 5 which are 10mm thick and are laminated together with interlayers 4 and 6 of soft polyvinylbutyral which are 1.5mm thick.

Adhered to the rear face of the glass sheet 5 is a composite lamina comprising a polycarbonate sheet 9 which is 0.5mm thick with an outer coating 10 of acrylate from 8 to 10 μm thick. This lamina is adhered to the rear glass face 11 by means of a layer 8 of thermoplastic polyester-based polyurethane which is 2mm thick. The coating 10 improves the abrasion resistance of the laminate without detriment to the anti-spall properties of the polycarbonate sheet 9. When the face 2 of the laminate was hit by a bullet from a 7.62 self-loading rifle under normal atmospheric conditions, and at a range of 30m, it was found that the glass sheets were broken but there was no penetration or bulging of the inner face of the laminate. Penetration did not take place until the third shot.

The outer coating 10 could be of polysiloxane or melamine, and the hard outer coating improves the abrasion resistance of the laminate without detriment to the anti-spall properties of the polycarbonate sheet 10.

In the embodiment of Figure 10 the composite lamina could be General Electric LEXAN (Trade Mark) 8C20-112 film.

Each embodiment of the invention could have such an abrasion-resistant hard coating on the polycarbonate sheet 9, instead of the coating of self-healing polyurethane as appropriate.

The invention may also be applied to a glass laminate for use as architectural glass having adhered to its rear glass face a polycarbonate sheet not more than 0.64mm thick, or the composite lamina, already described, of thin polycarbonate sheet with an outer coating of self-healing polyurethane, or an abrasion-resistant, hard coating, for example polysiloxane, melamine or acrylate.

In the embodiments of the invention, which employ a self-healing coating 10, that coating may be of an abrasion resistant polyurethane of the kind described in GB 2 011 836A or GB 2 070 045A. This self-healing coating may be as thin as 0.125mm but is preferably 0.25mm to 0.50mm thick.

Claims

1.    An impact-resistant laminate having a rear glass face (7) opposite to the face which receives the impact and a rear polycarbonate sheet (9) adhered to that rear glass face, characterised in that the laminate is at least 6mm thick, and the rear polycarbonate sheet (9) is up to 3mm thick and is sufficiently thin to be adhered to the rear glass face (7) without preforming to match the conformation of the rear glass face.

2.    An impact-resistant glass laminate having a rear polycarboate sheet (9) adhered to a rear glass face (7) opposite to the glass face which receives the impact, characterised in that the polycarbonate sheet (9) is of thickness in the range 0.25 to 3mm and is sufficiently thin to be adhered to the rear glass face (7) without preforming to match the conformation of the rear glass face.

3.    An impact-resistant laminate according to Claim 1 or Claim 2, wherein the polycarbonate sheet (9) is not more than 0.64mm thick.

4.    A laminate according to Claim 2 or Claim 3, comprising a number of glass sheets (1, 3, 5) with the polycarbonate sheet (9) adhered to the rear face (7) of the glass sheet (5) opposite to a glass sheet (1) which receives the impact.

5.    An impact-resistant glass laminate according to Claim 1, comprising a number of glass sheets (1, 3, 5) which are laminated together, with the polycarbonate sheet (9) adhered to the rear face (7) of the glass sheet (5) opposite to the glass sheet (1) which receives the impact.

6.    A laminate according to Claim 5, comprising two sheets of annealed glass (1, 3) bonded together by an interlayer (4) of polyvinylbutyral with the polycarbonate sheet (9) adhered to the rear glass face (11).

7.    A laminate according to Claim 5, comprising three sheets of annealed glass (1, 3, 5) bonded together by interlayers (4, 6) of polyvinylbutyral with the polycarbonate sheet (9) adhered to the rear glass face (7).

8.    A laminate according to Claim 5, wherein the front glass sheet (13) which receives the impact is a strengthened glass sheet.

9.    A laminate according to Claim 8, wherein the front glass sheet (13) is a semi-toughened glass sheet which, on impact, fractures in a manner which does not substantially impair vision through the laminate.

10.    A laminate according to Claim 9, wherein the semi-toughened glass sheet (13) is bonded by a polyvinylbutyral interlayer (14) to a rear sheet (15) of annealed glass to the rear face (16) of which the polycarbonate sheet is adhered.

11.    A laminate according to Claim 8, comprising two sheets of toughened glass (13, 15) bonded together by an interlayer (14) of polyvinylbutyral with the polycarbonate sheet (9) adhered to the rear face of the rear toughened glass sheet (15).

12.    A laminate according to Claim 1 or Claim 2, comprising a sheet (13) of toughened glass at least 3mm thick with the polycarbonate sheet (9) adhered to the rear face of the sheet.

13.    A laminate according to any one of Claims 1 to 12, wherein the thickness of the polycarbonate sheet (9) is in the range 0.25 to 0.64mm.

14.    A laminate according to any one of Claims 1 to 13, wherein the polycarbonate sheet (9) is adhered to the rear glass face by means of a thermoplastic polyurethane (8).

15.    A laminate according to any one of Claims 1 to 14, having an outer self-healing polyurethane coating (10) on the polycarbonate sheet.

16.    A laminate according to any one of Claims 1 to 14, having an
outer abrasion-resistant hard coating (10) on the polycarbonate sheet.

17.    An impact-resistant glass laminate according to Claim 5, having
adhered to the rear glass face (7) opposite to the glass face which
receives the impact, a composite lamina comprising a polycarbonate
sheet (9) of thickness in the range 0.25 to 0.64mm having an outer
self-healing polyurethane coating (10), which composite lamina is
adhered to the rear glass face by a layer (8) of thermoplastic
polyester based polyurethane which is of thickness in the range 1.5 to
4mm.

18.    A laminate according to Claim 17, comprising a sheet of toughened
glass (13) 5mm thick which is laminated to a sheet of annealed glass
(15) which is 2 to 3mm thick by an interlayer (14) of soft
polyvinylbutyral which is 9 to 11mm thick, with the composite lamina
(9, 10) adhered to the rear face of the sheet (15) of annealed glass by
the layer (8) of polyurethane which is 2mm thick.

19.    A laminate according to Claim 17, comprising two sheets (1, 3) of
annealed glass which is 12mm thick which are laminated together with an
interlayer (4) of polyvinylbutyral which is 1.5mm thick, and a sheet of
annealed glass (5) which is 3mm thick laminated to the rear face of one
(3) of the 12mm thick glass sheets by an interlayer of polyvinylbutyral
(6) which is 3mm thick, and with the composite lamina (9, 10) adhered
to the rear face of the 3mm thick glass sheet (6) by the layer (8) of
polyurethane which is 2mm thick.

20.    A composite lamina comprising a polycarbonate sheet (9) 0.25mm to
0.64mm thick having a self-healing polyurethane coating (10) on one
face thereof.

0157645

1/2

FIG. 1.

FIG. 2.

FIG. 3.

FIG. 4.

FIG. 5.

0157645

FIG. 6.

FIG. 7.

FIG. 8.

FIG. 9.

FIG. 10.